# EUROPEAN PATENT APPLICATION

(11) **EP 0 917 346 A2**
(43) Date of publication of application: **19.05.1999**
(21) Application number: 98309289.1
(22) Date of filing: 13.11.1998
(51) Int. Cl.: H04N 1/333, H04N 1/04

(54) **Coinciding resolutions of facsimile devices**

(30) Priority: 13.11.1997 KR 5962197
(71) Applicant: Samsung Electronics Co., Ltd., Suwon-si, Kyungki-do (KR)
(72) Inventor: Yu, Sang-yun, Sungpuk-gu, Seoul (KR)
(74) Representative: Tunstall, Christopher Stephen

(57) **Abstract**

Methods of operating transmission-side and reception-side facsimile devices are described. Protocols are exchanged between the facsimile devices to allow one or both to determine the resolution of the other. A document is scanned by driving a document advance motor. The scanned document data obtained from the document is transmitted to the reception-side facsimile and printed by driving a record sheet advance motor. The rate at which one or other motor is driven depends upon the resolution of the other facsimile device so that the difference in resolution between the transmission-side and reception-side facsimiles is reduced.

## Description

### BACKGROUND TO THE INVENTION

The present invention relates to the operation of facsimile devices having different systems of measurement such as metric and UK systems of measurement, to coincide their resolutions.

Generally, communication using facsimile devices involves transmitting image data from a transmission-side facsimile device to a reception-side facsimile device through a public switching telephone network (PSTN). Facsimile devices transmit and receive data according to the rules of the international telecommunication union-the telecommunication standardisation sector (ITU-T) on telecommunication. Facsimile devices may use the metric system of measurement or the UK system of measurement with reference to regions in which the facsimile devices are used.

There are three types of facsimile device that use the metric system of measurement depending on the accuracy of the scanner as follows:
1. Standard mode: one dot is 1/3.85 mm;
2. Fine mode: one dot is 1/7.7 mm;
3. Super fine mode: one dot is 1/15.4 mm.

Expressed in the UK system of measurement, the resolution in the standard mode is about 98 dpi, in the fine mode about 196 dpi and in the super fine mode is about 391 dpi. As 300 dpi resolution is established as a standard by ITU-T, which is the same as that in a general printer, no correspondence exists between the metric system of measurement (one of the standards) and the UK system of measurement (the other of the standards) in the rules.

There are two types of facsimile device that use the UK system of measurement depending on the accuracy of the scanner as follows:
1. Fine mode: one dot is 1/200 inch (1/7.87 mm).
2. Super fine mode: one dot is 1/300 inch (1/11.81 mm).

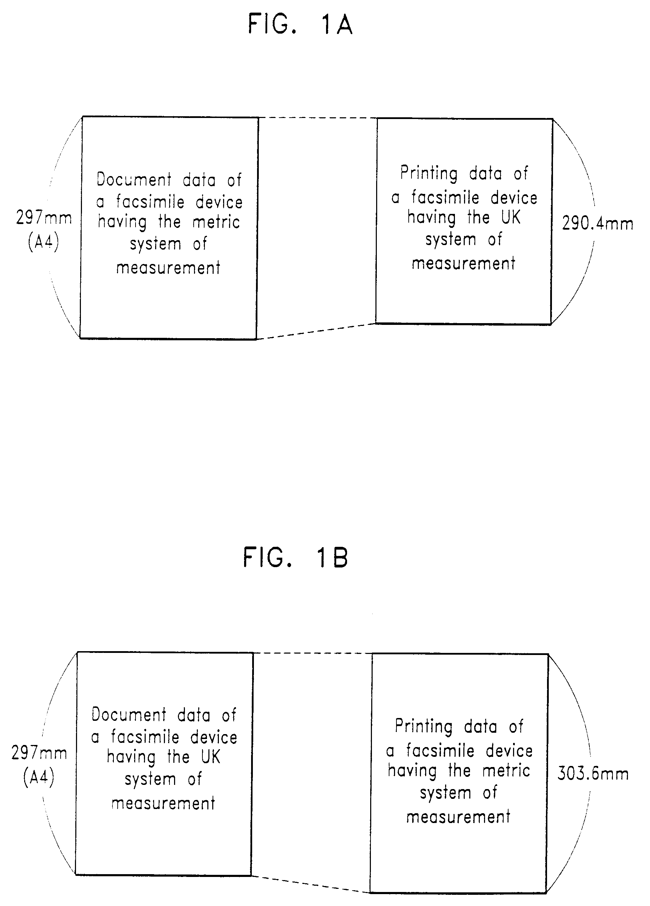

When the facsimile device which has a resolution of 300 dpi and an algorithm for converting 200 dpi into 300 dpi receives and prints facsimile data transmitted from a facsimile device designed to use the metric system of measurement and operating in fine mode, the facsimile data is printed reduced by about 2.2% as shown in FIG. 1A. On the other hand, when the facsimile device which has a resolution of 300 dpi scans a document and transmits the facsimile data converted to a resolution of 200 dpi to a facsimile device having the metric system of measurement, the facsimile data is printed enlarged by 2.2% as shown in FIG. 1B.

A facsimile device having the metric system of measurement has a resolution of about 196 dpi in the fine mode, which does not coincide with the resolution of 200 dpi of the facsimile device having the UK system of measurement. There is no exact coinciding of these resolutions in spite of using algorithms for converting between 200 dpi and 300 dpi.

To coincide the resolutions of facsimile devices having the different systems of measurement, it has been proposed that a chip containing a separate processing program be mounted in the facsimile device. Since the proposition causes the cost of manufacturing to increase, the competitiveness of facsimile devices in which the chip is used is decreased.

It is possible to carry out editing such as deletion or copying of lines that are printed so as to coincide the resolutions of the facsimile devices having different systems of measurement. However, this causes the quality of the image to be degraded.

### SUMMARY OF THE INVENTION

The present invention is designed to overcome these problems.

Accordingly, the present invention provides a method of operating a transmission-side facsimile device comprising:
exchanging protocols with a reception-side facsimile device to determine the resolution of the reception-side facsimile device;
scanning a document by driving a document advance motor at a rate which depends upon the resolution so determined; and
transmitting scanned document data obtained from the document to the reception-side facsimile;
in which the said rate is such that the difference in resolution between the transmission-side and reception-side facsimiles is reduced.

The method may further comprise printing the transmitted document data.

The present invention also provides a method of operating a reception-side facsimile device comprising:
exchanging a protocol with a transmission-side facsimile device to determine the resolution of the transmission-side facsimile device;
receiving document data transmitted from the transmission-side facsimile device; and
printing the document data by driving a record sheet advance motor at a rate which depends upon the resolution so determined;
in which the said rate is such that the difference in resolution between the transmission-side and reception-side facsimiles is reduced.

Determining the resolution of the facsimile device may comprise determining its system of units. The system of units may be the metric system or the UK system or otherwise.

### BRIEF DESCRIPTION OF THE DRAWINGS

The present invention will now be described with reference to the accompanying drawings in which:
FIGs. 1A and 1B respectively show transmitted and received facsimile data;
FIG. 2 is a block diagram of a facsimile device according to the present invention;
FIG. 3 is a flow chart showing one process of coinciding the resolutions of facsimile devices according to the present invention;
FIG. 4 shows a process of exchanging protocols between a transmission-side facsimile device and a reception-side facsimile device;
FIG. 5 shows a construction of a high level data link control format;
FIGs. 6A to 6D respectively show dots having a predetermined size according to the rules of ITU-T;
FIGs. 7A and 7B show the lengths which a scanner and a printer move as a step motor varies its speed of rotating; and
FIG. 8 is a flow chart of another process of coinciding the resolutions of facsimile devices according to the present invention.

### DETAILED DESCRIPTION OF THE PREFERRED EMBODIMENTS

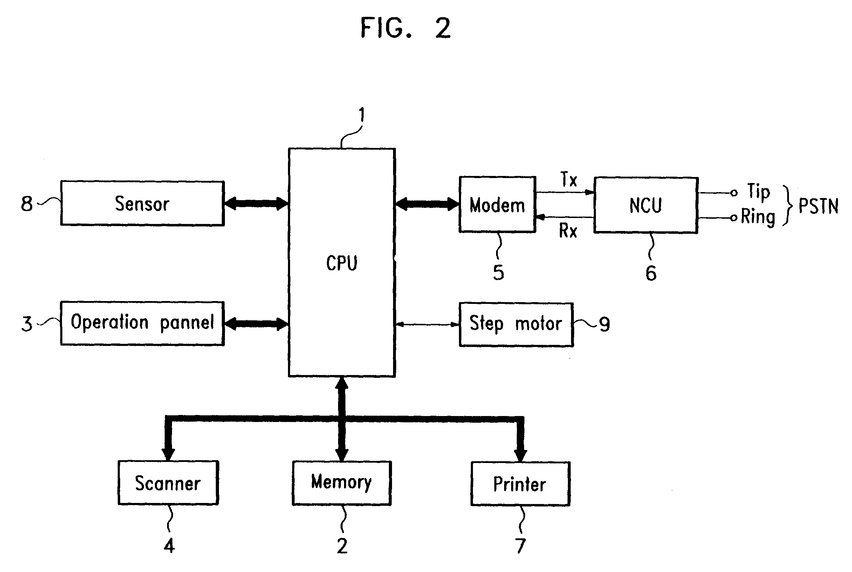

As shown in FIG. 2, a CPU 1 controls the operations of the facsimile device in accordance with a present program. A memory 2 includes program data, protocol data, character data and information for transmission and reception of data. Such data are accessed or stored in the memory 2 by means of the CPU 1 controlling the memory 2. An operational panel 3 includes a plurality of keys to generate key data and transmit the key data to the CPU 11 The operational panel 3 also includes a display showing display data transmitted from the CPU 1.

A scanner 4 scans data recorded on a document and converts the data into digital image data before transmitting the data to the CPU 1. A modem 5 is controlled by the CPU 1 to modulate the data output from the CPU 1 to analogue data and to demodulate the analogue data to digital data. A network control unit 6 operates to construct a communication loop with a PSTN (including RING and TIP) and to interface PSTN signals and the modem 5 according to the control signal of the CPU 1. A printer 7 prints facsimile data received according to the control signal of the CPU 1. A sensor 8 detects the recording paper remaining and senses a document to provide data to the CPU 1. A step motor 9 conveys the document or the recording paper at a rate adapted to the predetermined resolution according to the control signal of the CPU 1.

Two embodiments of the present invention will be described as follows.

### THE FIRST EMBODIMENT

The transmission-side facsimile device determines the unit system and the resolution of the reception-side facsimile and controls its own step motor during scanning of the document so as to vary its rate of conveyance. Then, the reception-side facsimile prints the facsimile data transmitted from the transmission-side facsimile device.

### THE SECOND EMBODIMENT

The transmission-side facsimile device transmits the facsimile data and the reception-side facsimile device determines the unit system and the resolution of the transmission-side facsimile device and controls its own step motor so as to vary the rate of conveyance of record during printing of the facsimile data.

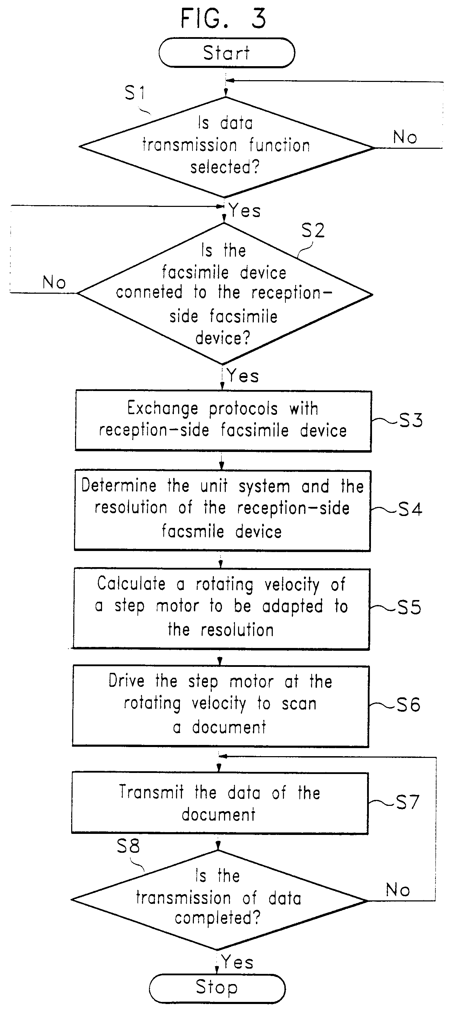

With reference to FIG. 3, in step S1, when a user selects the transmission mode in the transmission-side facsimile device, the CPU 1 controls the modem 5 to dial the telephone number of the reception-side facsimile device in step S2. Then, the transmission-side facsimile device exchanges protocols with the reception-side facsimile device in step S3.

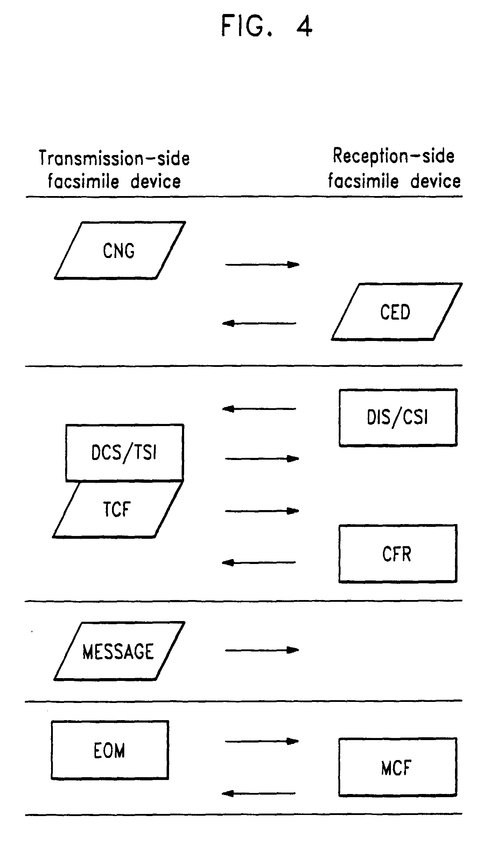

These protocols are exchanged between the transmission-side facsimile device as shown FIG. 4. That is, the transmission-side facsimile device transmits a calling tone signal (CNG signal) to the reception-side facsimile device. The reception-side facsimile device transmits a called station identification signal (CED signal) responsive to the CNG signal to the transmission-side facsimile device. Then, the transmission-side and reception-side facsimile devices exchange a digital identification signal (DIS) and a digital command signal (DCS) having a high level data link control format (HDLC format). In FIG. 4, "TSI" represents a transmitting subscriber identification and "CSI" represents a called subscriber identification.

The transmission-side facsimile device transmits a transmission confirmation signal (TCF signal) to the reception-side facsimile device and the reception-side facsimile device transmits a confirmation to a reception signal (CFR signal) responsive to the TCF signal to the transmission-side facsimile device. Then, the transmission-side facsimile device transmits a message or messages to the reception-side facsimile device and also transmits an end of message informing a completion of message transmission to the reception-side facsimile device after transmitting the message or messages. The reception-side facsimile device transmits a message confirmation signal informing of receipt of the message in the transmission-side facsimile device. This results in complete message transmission.

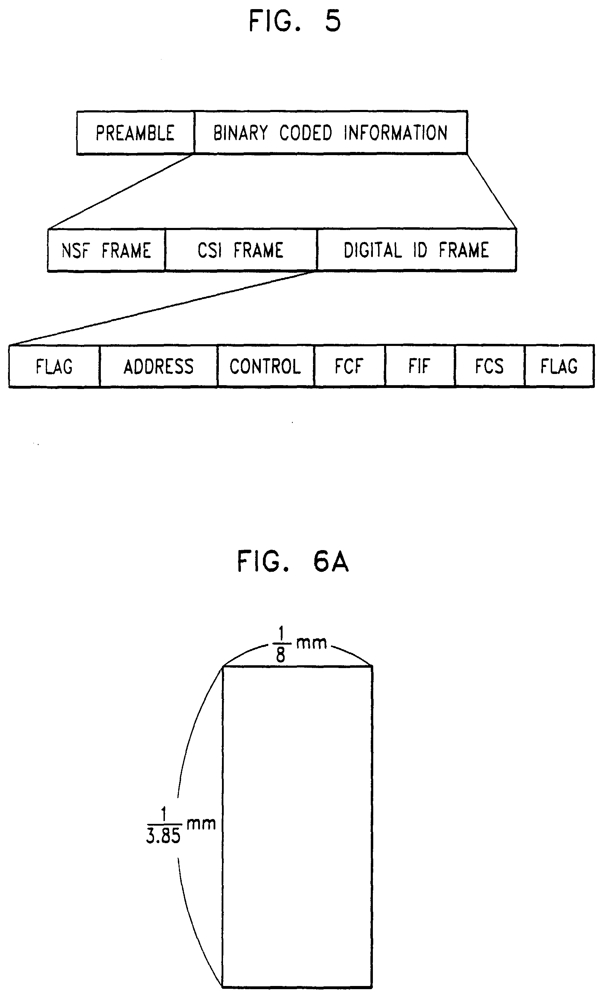

The structure of the HDLC format is shown in FIG. 5. "FCF" is the kind of information which the transmission-side facsimile device and the reception-side facsimile device exchange with each other. "FIF" is an information area including the information that is exchanged by the transmission-side facsimile device and the reception-side facsimile device, which is transmitted from the transmission-side facsimile device to the reception-side facsimile device just before substantial data are transmitted to the reception-side facsimile device.

In step S4, the transmission-side facsimile device determines the unit system and the resolution of the reception-side facsimile device through the information that is included in DIS and DCS. Then, the transmission-side facsimile device calculates the required rotating speed of the step motor to correspond to the resolution of the reception-side facsimile device in step S5. Finally, the transmission-side facsimile device scans the document with step motor 9 driving at the calculated rotating velocity in step S6.

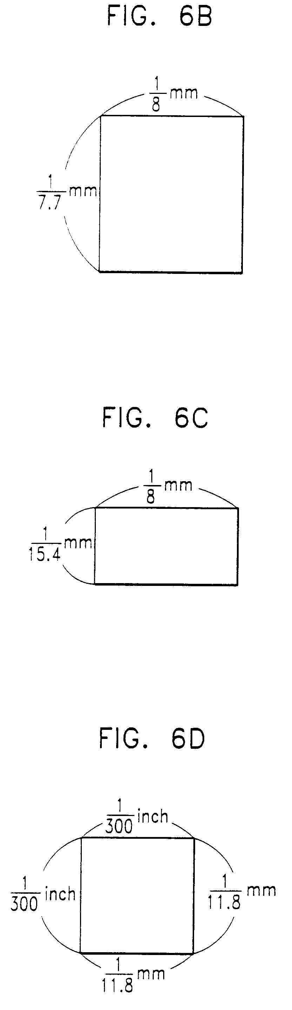

The rules of ITU-T provide four dot sizes as shown in FIGs. 6A to 6D. The dots as shown in FIG. 6A to 6C are printed by facsimiles devices having the metric system of measurement and the dot as shown in FIG. 6D is printed by a facsimile device having the UK system of measurement.

When the facsimile data are transmitted from the facsimile device having the metric system of measurement, which has a scanner having 300 dpi, the dots sizes must be converted to 1/3.85 mm, 1/7.7 mm or 1/15.4 mm. To convert the dots, the facsimile device must control the rotating velocity of the step motor 9 and the speed of conveyance of the document.

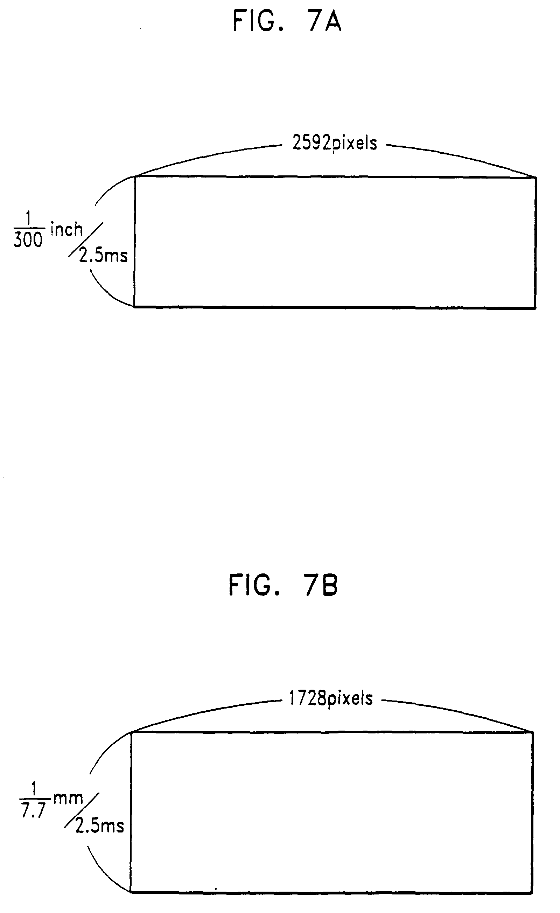

The rotating velocity of step motor is represented by a number of pulses per a second, provided that it takes the scanner 2.5 ms to scan a dot. If a transmission-side facsimile device has a resolution of 300 dpi and transmits the facsimile data to the reception-side facsimile device having a resolution of 300 dpi, when step motor 9 drives at 400 pps, the scanner 4 moves a distance of 1/300 inch per 2.5 ms in the lengthwise direction of a document so as to scan the document as shown in FIG. 7A.

On the other hand, if a transmission-side facsimile device having a resolution of 300 dip scans a document and transmits the facsimile data of the document to the reception-side facsimile device, when the rotating velocity of the stop motor 9 is set to 613 pps, the scanner 4 moves at a distance of 1/7.7 mm per 2.5 ms in the lengthwise direction of the document so as to scan the document. The facsimile data are transmitted to the reception-side facsimile device line by line or page by page in step S7.

When the transmission of the facsimile data is complete, the transmission-side facsimile device finishes processing.

In the case of transmission and reception of facsimile data between facsimile devices that take the same time to scan a line of data, when the facsimile data are transmitted from the transmission-side facsimile device having the UK system of measurement to the reception-side facsimile device having the metric system of measurement, the lengths of the dots can be adjusted by controlling the rotating speed of step motor 9. This can be applied to the case where facsimile data are transmitted from a facsimile device having the metric system of measurement to one having the UK system of measurement.

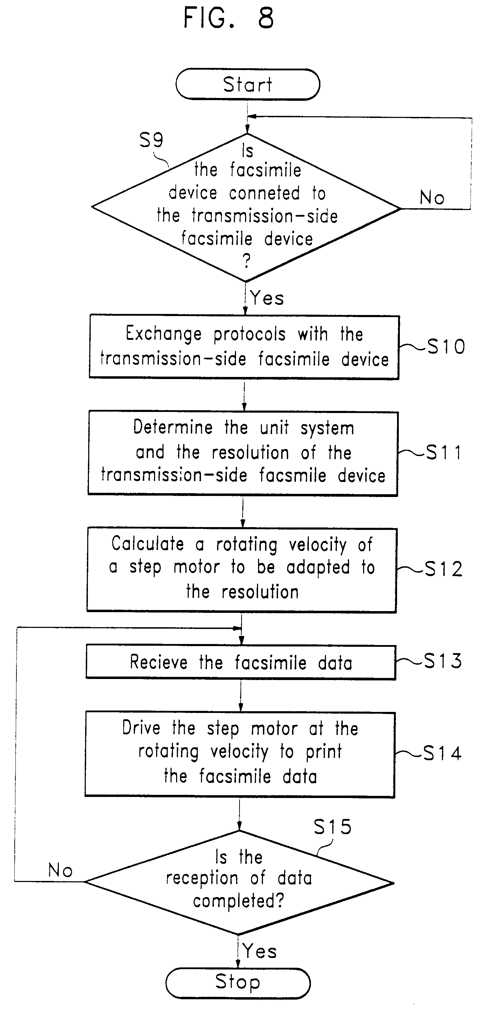

The process of coinciding the resolutions of the facsimile devices according to the second embodiment of the present invention will now be described with reference to FIG. 8. The second embodiment is a variation of the first embodiment of the present invention. Accordingly, it is understood that FIGs. 4 to 7 are still applicable. In step S9, the reception-side facsimile device receives a ring signal from the transmission-side facsimile device to be connected with the communication line. Then, the reception-side facsimile device exchanges protocols with the transmission-side facsimile device in step S10. The protocols are exchanged between the facsimile devices as described with reference to FIGs. 4 and 5.

In step S11, the reception-side facsimile device determines the unit system and the resolution of the transmission-side facsimile device through the DIS and DCS involved in the protocols exchanged with the transmission-side facsimile device. Then, the reception-side facsimile device calculates the rotating speed of step motor 9 corresponding to the resolution of the transmission-side facsimile device in step S12. In step S13, the reception-side facsimile device receives facsimile data from the transmission-side facsimile device. In step S14, the reception-side facsimile device drives step motor 9 at the rotating speed calculated in step S12 to print the facsimile data.

Finally, the reception-side facsimile device checks whether the reception of the facsimile data is complete, in step S15. When the reception of the facsimile data is complete, the reception-side facsimile device finishes processing.

When transmission and reception of facsimile data between facsimile devices having the same line scan times and the facsimile data are transmitted from the transmission-side facsimile device using the UK system of measurement to the reception-side facsimile device using the metric system of measurement, the sizes of the dots can be adjusted by controlling the rotating speed of step motor 9. This can also be applied when the facsimile data are transmitted from the facsimile device using the metric system of measurement to the facsimile device using the UK system of measurement. Thus, the process uses a simple program without adding a correcting device for the facsimile device so that the length of the dot can be adjusted. This results in improving the competitiveness of the facsimile device. Also, the facsimile device according to the present invention provides an excellent image without editing the facsimile data to adjust the length of the dot on the recording paper.

## Claims

1. A method of operating a transmission-side facsimile device comprising:
exchanging protocols with a reception-side facsimile device to determine the resolution of the reception-side facsimile device;
scanning a document by driving a document advance motor at a rate which depends upon the resolution so determined; and
transmitting scanned document data obtained from the document to the reception-side facsimile;
in which the said rate is such that the difference in resolution between the transmission-side and reception-side facsimiles is reduced.

2. A method according to claim 1, further comprising printing the transmitted document data.

3. A method of operating a reception-side facsimile device comprising:
exchanging a protocol with a transmission-side facsimile device to determine the resolution of the transmission-side facsimile device;
receiving document data transmitted from the transmission-side facsimile device; and
printing the document data by driving a record sheet advance motor at a rate which depends upon the resolution so determined;
in which the said rate is such that the difference in resolution between the transmission-side and reception-side facsimiles is reduced.

4. A method according to any preceding claim in which determining the resolution of the facsimile device comprises determining its system of units.

5. A method according to claim 4 in which the system of units may be the metric system or the UK system or otherwise.

6. A method of operating a reception-side facsimile device as described herein with reference to FIG. 3 of the accompanying drawings.

7. A method of operating a reception-side facsimile device as described herein with reference to FIG. 8 of the accompanying drawings.
